# EUROPÄISCHE PATENTSCHRIFT

(11) **EP 1 701 056 B1**
(45) Veröffentlichungstag und Bekanntmachung des Hinweises auf die Patenterteilung: **17.06.2009**
(21) Anmeldenummer: 06110742.1
(22) Anmeldetag: 07.03.2006
(51) Int. Cl.: F16D 65/12

(54) **Radbremse**
Wheel brake
Frein de roue

(30) Priorität: 07.03.2005 DE 102005010334
(43) Veröffentlichungstag der Anmeldung: 13.09.2006
(73) Patentinhaber: Habenicht, Hinrich, 86368 Gersthofen (DE)
(72) Erfinder: Habenicht, Hinrich, 86368 Gersthofen (DE)
(74) Vertreter: Alber, Norbert

(56) Entgegenhaltungen:
- DE-A1- 3 809 229
- DE-A1- 10 154 334
- FR-A- 2 745 349
- GB-A- 2 393 486
- US-A- 4 762 215

## Beschreibung

### I. Anwendungsgebiet

Die Erfindung betrifft Radbremsen, insbesondere Scheibenbremsen für Straßen-und Schienenfahrzeuge sowie die Fahrwerke von Flugzeugen.

### II. Technischer Hintergrund

Zur Vereinfachung wird im Folgenden ausschließlich von Scheibenbremsen gesprochen, ohne die Erfindung hierauf zu beschränken, da alle hier vorgebrachten Lösungen auch auf Trommelbremsen und andere Formen von Radbremsen anwendbar sind. Die Erfindung ist dabei insbesondere auf solche Radbremsen gerichtet, bei denen als wenigstens ein Teil der Reibpaarung der Bremse so genanntes keramisches Material verwendet wird.

Als keramisches Material wird in der vorliegenden Anmeldung ein Material definiert, welches Carbide und/oder Nitride, insbesondere Siliziumcarbid oder Siliziumnitrid, enthält und/oder bei denen Füllstoffe, insbesondere Carbide, in einer Matrix aus Kohlenstoff, insbesondere in Form von Kohlenstofffasern, aufgenommen sind.

Konventionelle Scheibenbremsen bestanden bisher aus einer Bremsscheibe aus Metall, insbesondere Grauguss, Aluminium oder Stahl, gegen welche ein Bremsklotz mit einem Bremsbelag gepresst wurde. Ein solcher Bremsbelag, ein so genannter "organischer Bremsbelag", besteht aus einem Gemisch, welches organische Bestandteile (z. B. Harze, Kautschuk), insbesondere in Form von organischen Fasern (z. B. Aramidfasern), anorganische Bestandteile, insbesondere Metalle und Metallverbindungen, insbesondere in Form von Fasern (z. B. Mineralfasern, Stahlfasern, Glasfasern, Keramikfasern), Füllstoffe, Reibungseinstellstoffe (z. B. Graphit oder Bariumsulfat) und/oder Bindemittel, insbesondere Harze, insbesondere Fenolharz, enthält. Beispiele für organische Füllstoffe sind Styren-Butadien-Kautschuk, Acrylnitril-Butadien-Kautschuk, Urethan-Kautschuk, Ethylen-Propylen-Kautschuk, Isoprenkautschuk, Silikon-Kautschuk oder anderer unvulkanisierter Kautschuk.

Da bei diesen Reibpaarungen bei einem z. B. Personenkraftwagen keine Lebensdauer erzielbar war, bei denen wenigstens der härtere Teil der Reibpaarung, in diesem Fall die Bremsscheibe aus Metall, die Lebensdauer des Kraftfahrzeuges erreichte, und der Bremsklotz noch wesentlich öfter gewechselt werden musste, wurden andere Reibpaarungen entwickelt.

So sind bereits Radbremsen bekannt, bei denen die Bremsscheibe insgesamt aus keramischem Material besteht, und der Klotzbelag des Bremsklotzes entweder ebenfalls keramisches Material als Reibbelag aufwies oder die üblichen, lediglich in ihrer Zusammensetzung leicht abgewandelten, zuvor erwähnten organischen Bremsbeläge wie bei metallenen Bremsscheiben.

Dabei wurde anstelle des vorbeschriebenen keramischen Materials zunächst nur Kohlenstoff, insbesondere verstärkt mit einem Anteil von Kohlenstofffasern, z. B. als Kohlenstoffgewebe, verwendet, der mit einem Binder, meist einem Phenol-oder Epoxydharz, versetzt und verpresst und ausgehärtet wurde. Danach erfolgt das Karbonisieren und Graphitisieren des Presslings, meist mehrmals hintereinander, um eine entsprechende Dichte zu erzielen, gefolgt von der mechanischen Bearbeitung des Materials.

Dieser kohlenstofffaserverstärkte Kohlenstoff (CFC) wird noch heute bei den Rennfahrzeugen der Formel 1 und den Radbremsen bei Flugzeugen sowohl für die Bremsscheibe als auch als Bremsklotzbelag eingesetzt. Die Vorteile des geringen Gewichts und der hohen Bremsleistung werden dabei jedoch mit den Nachteilen einer geringen Lebensdauer durch hohen Abrieb, schlechtes Nassbremsverhalten und einem oxydativen Abbrand an Luft bei Temperaturen ab etwa 480°C erkauft.

Durch Einlagern eines Carbides oder Nitrides, insbesondere eines SiliziumCarbid (SiC)-Pulvers wurde diese Temperaturgrenze zwar auf etwa 1.100 °C angehoben, aufgrund der chemischen Unverträglichkeit von Kohlenstoff und SiC musste jedoch dabei der Kohlenstoff, insbesondere die Kohlenstofffasern, durch Beschichten oder Tränken z. B. mittels Phenol-Harzen oder CVD-Infiltration von Methan gegen direkten Kontakt mit dem SiC geschützt werden, so dass insgesamt eine Vielzahl von Fertigungsschritten zur Herstellung einer solchen Bremsscheibe aus so genanntem CSiC-Material erforderlich war.

Weiterhin wiesen auch derartige CSiC-Scheiben den prinzipiellen Nachteil - neben den hohen Herstellungskosten - einer hohen Sprödigkeit und sehr schweren mechanischen Bearbeitbarkeit, beispielsweise zum Zwecke des Auswuchtens, auf.

Diese sogenannten keramischen Bremsen wiesen nunmehr zwar eine hohe, etwa der Lebensdauer eines Kraftfahrzeuges entsprechende, Lebensdauer auf, sowie sehr gute Verzögerungswerte, sind jedoch aufgrund des aufwendigen Herstellungsprozesses - vor allem für die hohen dynamischen Belastungen ausgesetzte keramische Bremsscheibe bzw. deren keramischen Reibbelag - sehr teuer und besitzen dennoch die beschriebenen Systemimmanenten Nachteile.

Deshalb ist es darüber hinaus aus der DE 101 54 334 bereits bekannt, nur den Belag des Bremsklotzes aus dem harten, keramischen Material zu fertigen, den Reibbelag der Bremsscheibe dagegen aus einem demgegenüber weicheren Material zu fertigen, beispielsweise dem Material heutiger konventioneller Bremsklotzbeläge, insbesondere organischem Bremsbelag.

Diesem Vorschlag liegen vor allem zwei Gedanken zugrunde:
- Zum einen ist die Herstellung eines keramischen Teiles lediglich in Form eines kleinflächigen, gut unterstützten Bremsklotzbelages hinsichtlich Biegefestigkeit und Maßhaltigkeit sehr viel unproblematischer als das Herstellen einer großflächigen Bremsscheibe,
- zum anderen ist das weichere und schneller verschleißende Material der Reibpaarung, also zum Beispiel der konventionelle Bremsbelag, durch das Aufbringen auf die Bremsscheibe nunmehr über einen ca. 8 bis 10 Mal so großen Flächenbereich verteilt, wodurch bei gleicher Materialstärke deren Lebensdauer gegenüber der eines entsprechend kleineren Bremsklotzes analog verlängert wird.

Der Nachteil eines eventuell schwierigeren Wechsels des weicheren Teils der Reibpaarung, also des Belages auf der Bremsscheibe, steht also eine Lebensdauer der Bremse entgegen, die mit der Lebensdauer des gesamten Fahrzeuges etwa übereinstimmen dürfte.

Zusätzlich sind in dieser Schrift Vorschläge unterbreitet, wie durch segmentierte Bremsscheiben-Beläge deren Auswechseln einfach gestaltet werden kann.

Die DE 101 54 334 zeigt als nächstreichenden Stand der Technik eine Bremsscheibe, auf der ein Bremsbelag - der weicher ist als der Bremsbelag des Bremsklotzes - vollflächig durch Verkleben oder Aufsintern aufgebracht ist.

### III. Darstellung der Erfindung

### a) Technische Aufgabe

Es ist daher die Aufgabe gemäß der Erfindung, eine Radbremse der gattungsgemäßen Art sowie ein Verfahren zu ihrer Herstellung zu schaffen, bei der die Herstellung vor allem der Bremsscheibe möglichst einfach und kostengünstig ist und die ggfs. mögliche Demontage des Scheibenbelages dennoch auf einfache Art und Weise erfolgen kann.

### b) Lösung der Aufgabe

Diese Aufgabe wird durch die kennzeichnenden Merkmale des Anspruches 1 und 6 gelöst. Vorteilhafte Ausführungsformen ergeben sich aus den Unteransprüchen.

Der Scheibenbelag ist auf dem Basiskörper aufgekupfert, eine Art Lötprozess, bei dem das Grundmaterial, beispielsweise der Zwischenring aus Stahl, mit einer Kupferpaste bestrichen, der Bremsbelag aufgelegt und beides zusammen in einem Ofen auf ca. 1000 °C erhitzt wird, wodurch das Bindematerial verflüssigt wird und nach dem Abkühlen sich mit dem Grundmaterial und dem Belag innig verbindet und eine feste Verbindung ergibt, ohne dass es zu einem Verzug des Basismaterials kommt.

Zum einen liegen die hierfür notwendigen Temperaturen höher als im späteren Betreiben der Bremse jemals erreicht werden, zum anderen ist die konkret benötigte Temperatur für dieses Fügeverfahren abhängig von der verwendeten Metalllegierung, kann also in weiten Grenzen gesteuert werden, vor allem wenn der Hauptanteil des Lotes nicht Kupfer sondern ein anderes Metal ist.

Ein derartiger Zwischenring kann wegen der größeren Scherfestigkeit des Materials des Zwischenringes, vor allem wenn er aus Stahl besteht, gegenüber derjenigen des Scheibenbelages einfacher zum Beispiel mittels normalem Verschrauben oder Vernieten an den Basiskörper fixiert werden, wobei die Befestigung vorzugsweise in Bereichen des Zwischenringes erfolgt, die nicht vom Scheibenbelag abgedeckt werden und die Befestigungselemente axial vorzugsweise nicht oder nur möglichst wenig in den Axialbereich des Scheibenbelages hineinreichen.

### Ein solcher Zwischenring bietet darüber hinaus weitere Vorteile:

Zum einen trägt der Zwischenring selbst zur Stabilität der gesamten Radbremse bei, die ansonsten ausschließlich vom Basiskörper gewährleistet werden muss. Somit kann der Basiskörper schwächer dimensioniert werden.

Bei innenbelüfteten Bremsscheiben, bei denen sternförmig radial verlaufende Belüftungsöffnungen eingearbeitet sind und die Stege zwischen den Öffnungen die beiden Stirnplatten der Bremsscheibe miteinander verbinden, kann diese Stirnplatte entweder dünner ausgeführt oder vollständig weggelassen werden, so dass die sternförmig radial verlaufenden Stege lediglich an dem inneren Ende durch die Nabe des Basiskörpers und am äußeren Ende durch einen ringförmig über alle Stege durchgehend umlaufenden Außenwulst miteinander verbunden sind.

Die dadurch mögliche Gewichtsersparnis beim Basiskörper wird zum Teil, aber nicht vollständig durch das Gewicht der Zwischenscheibe aufgezehrt.

Eine Verschraubung des Zwischenringes ist dabei nach wie vor, beispielsweise in entsprechende Gewindebohrungen in die ausreichend breit bemessenen Stege hinein, möglich.

Ein weiterer Vorteil liegt darin, dass Versuche gezeigt haben, dass - offensichtlich aufgrund des Materials bzw. der Wärmeleitfähigkeit des Scheibenbelages - die Temperatur auf der axialen Rückseite des Scheibenbelages und damit auch des Zwischenringes auch bei Höchstbelastung der Bremse so niedrig bleibt, dass der Basiskörper nicht aus schwerem Grauguss bestehen muss, sondern aus einem leichteren Material, insbesondere Aluminium, bestehen kann.

Auch Stahlkonstruktionen, insbesondere ausgeführt als Schweißteil, sind - dann entsprechend dünnwandig ausgeführt - möglich und könnten zu einer Gewichtseinsparung führen.

Unabhängig davon, ob der Scheibenbelag direkt oder mittels eines ein- oder mehrsegmentigen Zwischenringes am Basiskörper befestigt wird, ist es vorteilhaft, die Fixierung gegen Verdrehen in Umfangsrichtung zu trennen von der axialen Fixierung gegenüber dem Basiskörper:

So kann beispielsweise die axiale Fixierung durch einfache, relativ schwach dimensionierte Verschraubung oder Vernietung und insbesondere auch Verrastung erfolgen, indem Erhebungen am einen Teil mit Rastnasen ausgebildet sind, die in entsprechende Vertiefungen des anderen Teiles einrasten, in dessen Außenumfang sich dabei die Rastnasen so verhaken, dass ein Abziehen zumindest bei den auftretenden Axialbelastungen im Betrieb nicht möglich ist, insbesondere ohne Zerstörung des aufgebrachten Teiles, also Zwischenringes oder Scheibenbelages selbst, nicht möglich ist.

Dies empfiehlt sich insbesondere beim Aufbringen des Scheibenbelages direkt auf den Basiskörper, indem am Basiskörper die Erhebungen mit den Rastnasen ausgebildet sein können, während der Scheibenbelag an den entsprechenden Stellen Bohrungen aufweist.

Nachteilig ist dann, dass die Erhebungen nicht zu weit axial in den Abriebbereich hinein vorstehen dürfen.

Bei der umgekehrten Lösung, die Erhebungen auf der Rückseite des Scheibenbelages auszubilden, werden diese Erhebungen vorzugsweise nicht stiftförmig punktuell gestaltet sein, sondern als linienförmige, radial oder schrägradial verlaufende Erhebungen, die in entsprechende Vertiefungen des Basiskörpers eingreifen, beispielsweise bei weggelassenen Stirnplatten des Basiskörpers in den Bereich zwischen zwei Stege, also in die Belüftungsöffnungen des Basiskörpers.

Die wulstförmigen Erhebungen können dabei von radial innen nach außen, insbesondere sich konisch verjüngend und insbesondere in ihrem Querschnitt einen verdickten Kopf aufweisend, also beispielsweise leicht schwalbenschwanzförmig gestaltet sein, was ein Ansetzen des Scheibenbelages radial weiter innen und formschlüssige Verbindung durch radial nach außen ermöglicht, dann selbstverständlich nur bei einem nicht ringförmigen, sondern mehrteiligen Scheibenbelag.

Theoretisch das gleiche ist mit einem Zwischenring ebenfalls möglich, jedoch ist aus Gründen der einfachen und kostengünstigen Herstellung ein glattflächiger, plattenförmiger Zwischenring zu bevorzugen.

Die Verdrehsicherung wird dann vorzugsweise durch radial vorstehende Erhebungen am einen Teil gelöst, die in entsprechende Vertiefungen am anderen Teil eingreifen und damit eine formschlüssige Verdrehsicherung zwischen dem Zwischenring und dem Basiskörper ermöglichen. Insbesondere weist dabei der Außenwulst und Innenwulst des Basiskörpers derartige in Richtung des Zwischenrings weisende Erhebungen über den Umfang verteilt auf, die in entsprechende Einkerbungen des Zwischenringes treffen.

Auch diese Lösung ist prinzipiell für die direkte Verbindung zwischen Scheibenbelag und Basiskörper möglich.

Für diese Art der Verdrehsicherung sollte vorzugsweise in radialer Richtung das gegenüber dem Basiskörper verdrehgesicherte Teil, sei es der Zwischenring oder der Scheibenbelag selbst, den radialen Abstand zwischen Außenwulst und Innenwulst des Basiskörpers möglichst passgenau ausfüllen, um eine spielfreie Fixierung in Drehrichtung zu ermöglichen.

Natürlich ist bei einer unlösbaren Verbindung ein separates Wechseln des Scheibenbelages als Verschleißteil überhaupt nicht mehr möglich, sondern es muss dann im Bedarfsfall der gesamte Basiskörper, also die Bremsscheibe samt Scheibenbelag, komplett gewechselt werden.

Dem steht entgegen, dass die Herstellung besonders einfach und kostengünstig sein könnte und dennoch die Verbindung zwischen Scheibenbelag und Basiskörper hoch belastbar.

Diese Lösung wird dann zu bevorzugen sein, wenn abhängig von der Reibpaarung eine Verschleißdauer des Scheibenbelages erreicht wird, die gleich oder größer ist als die zu erwartende Lebensdauer des gesamten Fahrzeuges, oder wenigstens bei 100.000 km liegt.

Trotz der unlösbaren Verbindung zwischen Scheibenbelag und Basiskörper kann auch hier zusätzlich eine formschlüssige Verdrehsicherung durch die beschriebenen radial wirkenden Erhebungen und Vertiefungen zusätzlich zur vollflächigen Verbindung vorgesehen sein.

Als axiale Fixierung und/oder zusätzliche Verdrehsicherung können Scheibenbelag und Basiskörper auch durch Verbindungsstifte, die in Axialrichtung verlaufen, verbunden sein, die aus einem relativ weichen Nichteisenmetall, beispielsweise Messing, Aluminium oder Kupfer bestehen, und im Scheibenbelag bis in dessen Verschleißbereich hineinreichen und dort mit abgerieben werden. Aufgrund der geringen Härte dieser Nichteisenmetalle und der geringen Querschnitte von 0,5 mm-2 mm sind Beeinträchtigungen der Bremswirkung als auch Beschädigungen der Bremse, insbesondere des Reibklotzbelages, nicht zu befürchten.

Bei der unlösbaren Verbindung ergibt sich eine sehr einfache Vorgehensweise dadurch, dass die komplette Einheit aus Basiskörper und Scheibenbelag extern komplett vormontiert wird was auch den Vorteil bietet, dass der Scheibenbelag auf jeder Seite einstückig ringförmig ausgeführt sein kann. Bei der Fahrzeugmontage muss dann lediglich der gesamte Basiskörper wie gewohnt montiert werden. Beim Wechseln des Scheibenbelages - falls dieses nötig werden sollte - wird der komplette Basiskörper gewechselt.

### c) Ausführungsbeispiele

Ausführungsformen gemäß der Erfindung sind im Folgenden beispielhaft näher beschrieben. Es zeigen:
- Fig. 1:: einen Axialschnitt durch die erfindungsgemäße Bremse,
- Fig. 2:: einen Schnitt entlang der Linie II-II der Fig. 1,
- Fig. 3:: eine stirnseitige Aufsicht auf die Bremsscheibe, und
- Fig. 4:: Detailansichten.

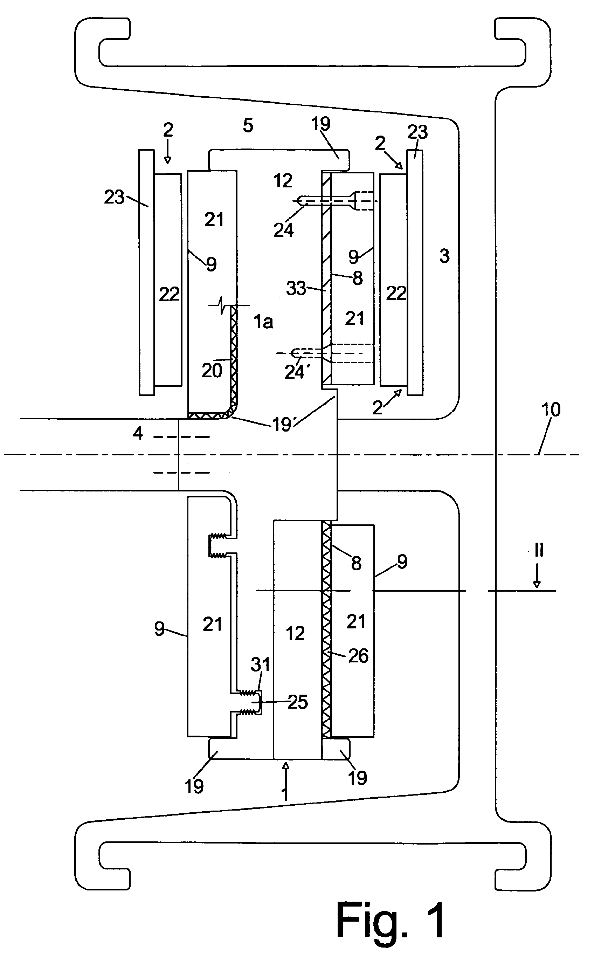

Im Längsschnitt der Fig. 1, geschnitten entlang der Achsrichtung 10 ist der grundsätzliche Aufbau zu erkennen mit der Nabe 4, auf deren Stirnfläche wie bekannt die Bremsscheibe 1 aufgeschraubt ist, auf deren vorderer Stirnseite wiederum die Felge des Rades 3 aufgeschraubt ist, welche mit ihrem Felgenbett axial und radial die Bremsscheibe 1 übergreift.

Gegen die Stirnflächen der Bremsscheibe 1 sind die beiden dazu im Abstand eingezeichneten Bremsklötze 2 axial anpressbar, deren Klotzbelag 22 erfindungsgemäß der härtere Teil der Reibpaarung der Bremse sein soll und insbesondere aus Keramikmaterial, insbesondere CSiC, besteht.

Abweichend vom konventionellen Aufbau trägt hier auch die Bremsscheibe 1, die sonst meist aus Grauguss besteht und deren Oberfläche direkt als Reibfläche dient, ebenfalls einen Bremsbelag, den Scheibenbelag 21, der am Grundkörper 1a der Bremsscheibe 1 befestigt ist, wobei die Befestigungsfläche radial außen durch einen axial überstehenden Außenwulst 19 begrenzt wird und radial innen durch einen Innenwulst 19', der das Zentrum des Basiskörpers 1a bildet.

In Fig. 1 sind mehrere Möglichkeiten der Befestigung des Scheibenbelages 21 am Basiskörper 1a dargestellt:

In der oberen Bildhälfte, linke Seite, ist der Scheibenbelag 21 direkt flächig mit dem Grundkörper 1a verbunden, beispielsweise durch Aufsintern des gesinterten Scheibenbelages 21 auf den Basiskörper 1a.

In der unteren Hälfte desselben Scheibenbelages 21 ist eine flächige Verbindung zum Basiskörper 1a mittels eines Klebers 20 dargestellt, der zusätzlich zur mechanischen Belastbarkeit ausreichend temperaturfest sein muss.

In der oberen Bildhälfte auf der rechten Seite ist der Scheibenbelag 21 auf seiner von der Kontaktfläche zum Bremsklotz hin abgewandten, rückseitigen Befestigungsfläche 8 auf einem Zwischenring 33 vollflächig aufgebracht, wiederum insbesondere aufgesintert, und dieser Zwischenring 33 seinerseits ist mit dem Basiskörper 1a verschraubt.

Die Schrauben 24 erstrecken sich dabei durch entsprechende Aussparungen im Scheibenbelag 21, wobei die radial weiter außen liegende Schraube 24 mit ihrer Flanschfläche des Schraubenkopfes in einer entsprechenden Gegenfläche des Scheibenbelages 21 anliegt, der vorzugsweise nicht mehr axial in den Verschleißbereich hineinragt. Die Scherkräfte werden dann aber teilweise vom Scheibenbelag 21 aufzunehmen sein.

Dies ist vermieden bei der radial weiter inneren Schraube 24', deren Schraubenkopf in einer entsprechenden Senkung ausschließlich des Zwischenringes 33 anliegt, der vorzugsweise aus Stahl besteht.

In der unteren Bildhälfte ist der Basiskörper 1a als so genannte "innenbelüftete Bremsscheibe" dargestellt, also mit Belüftungsöffnungen 12 im Inneren des Basisköpers 1a, die sternförmig radial nach außen verlaufen und nach außen offen sind.

Auf der linken Stirnfläche dieser unteren Hälfte ist der Scheibenbelag 21 mechanisch direkt befestigt, und zwar im radial innen liegenden Teil gelöst durch eine axial vom Grundkörper 1a vorstehende Rastnase 30, die in eine entsprechend geformte Rastvertiefung 31 in der Befestigungsfläche des Scheibenbelages 21 eingreift und sich dort mit ihren Rastnasen 30 verhakt.

Im radial weiter außen liegenden Bereich ist als Alternative hierzu die umgekehrte Lösung dargestellt mit einer axialen Erhebung 25, die sich von der Befestigungsfläche 8 des Scheibenbelages 21 aus axial erstreckt und eingedrückt wird in eine entsprechend geformte Rastvertiefung 31 des Basiskörpers 1a, aus deren Seitenwangen Rastnasen 30 vorstehen, die sich in der Erhebung 25 verkrallen.

Abgesehen von der in Fig. 1 dargestellten zapfenförmigen Gestalt der Erhebung 25 können diese auch linienförmig, insbesondere schräg radial verlaufend oder radial verlaufend, ausgeführt sein.

Auf der rechten Seite in der unteren Hälfte ist der Scheibenbelag 21 wiederum zunächst auf den Zwischenring 33, der insbesondere aus Stahl besteht, befestigt und dieser an dem Basiskörper 1a.

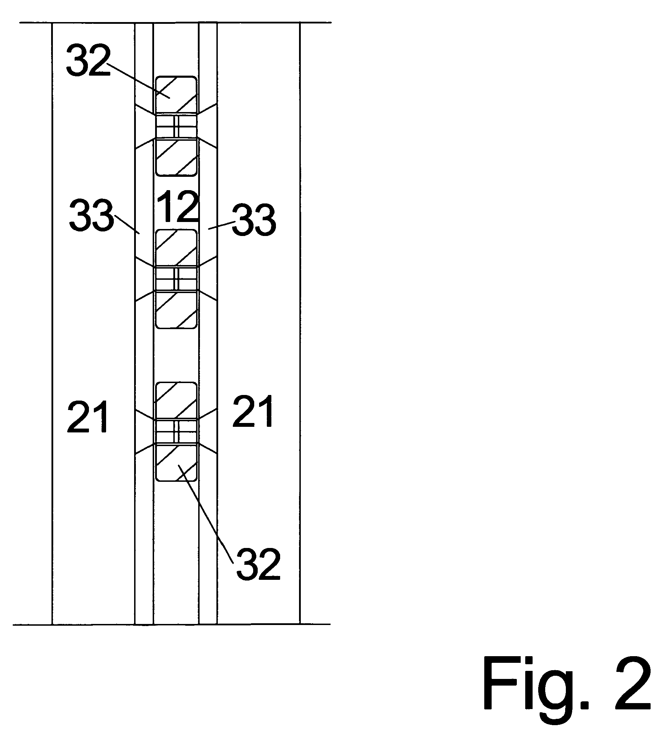

Dabei sind vom Basiskörper in den radialen Bereich zwischen Innenwulst 19' und Außenwulst 19 lediglich noch die Stege umfänglich zwischen den Belüftungsöffnungen 12 vorhanden, jedoch keine durchgehende Stirnfläche des Basiskörpers mehr. Der Zwischenring 33 liegt hier also axial stirnflächig direkt an den Stegen zwischen den Belüftungsöffnungen 12 an, wie insbesondere in der entsprechenden Schnittdarstellung der Fig. 2 zu erkennen ist, und wird dabei auch am Basiskörper 1a befestigt durch Verschrauben in Öffnungen 34 mitten in Gewinde 35 hinein, die in den Stegen 32 zwischen den Belüftungsöffnungen 12 vorhanden sind.

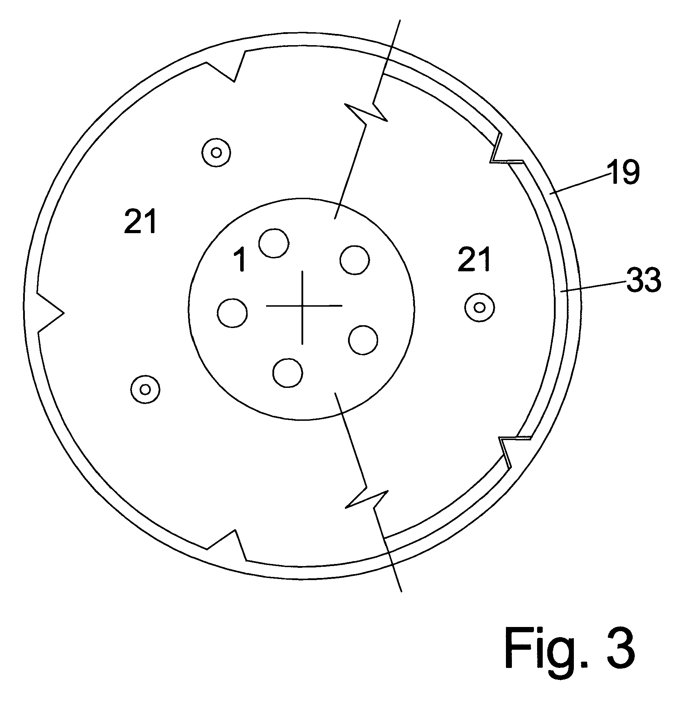

Fig. 3 zeigt die Verdrehsicherung zwischen Basiskörper 1a und dem Scheibenbelag 21:

In der linken Bildhälfte ist der Scheibenbelag 21 direkt auf dem Basiskörper 1a befestigt.

Axial vom Außenwulst 19 nach innen weisende Vorsprünge 36, von denen mehrere über den Umfang verteilt sind, greifen dabei formschlüssig und passgenau in entsprechende axiale Vertiefungen 37 ein, die im Außenumfang des Scheibenbelages 21 ausgebildet sind, unabhängig davon, ob dieser ringförmig einstückig oder segmentiert ausgebildet ist.

Gleiches gilt in der rechten Bildhälfte für das Zusammenwirken des Basiskörpers 1a, also dessen Außenwulst 19, mit einem dort vorhandenen Zwischenring 33, der den Scheibenbelag 21 trägt.

Die gleiche Verdrehsicherung kann stattdessen oder zusätzlich auch am Innenumfang des Scheibenbelages 21 bzw. der Zwischenscheibe 33 vorhanden sein.

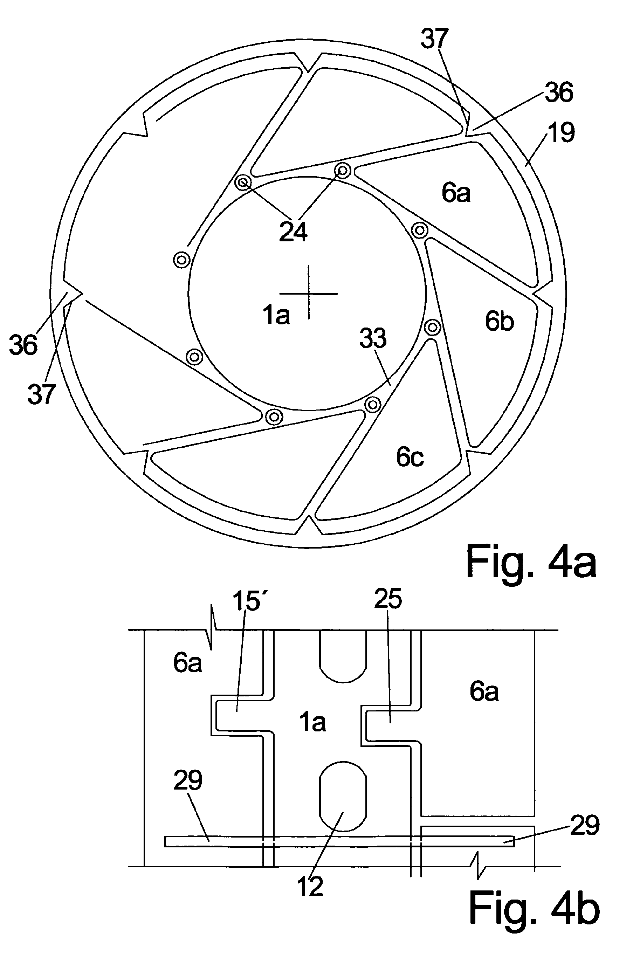

Die Fig. 4 zeigen Detaillösungen der Belagsbefestigung.

In der Aufsicht der Fig. 4a ist der Scheibenbelag 21 unterteilt in insbesondere etwa dreieckige Segmente 6a, b, ..., die insbesondere durch tangential zum Innenumfang des ringförmigen Scheibenbelages 21 verlaufende Trennfugen voneinander getrennt sind und auf einem Zwischenring 33 aufgebracht sind.

Die Verschraubung bzw. Vernietung des Zwischenrings 33 auf den Basiskörper erfolgt in Bereichen, die nicht von den Segmenten 6 a, b, c abgedeckt sind, also insbesondere den radial inneren und äußeren Endbereichen der Fugen, die vorzugsweise so gering wie möglich auszubilden sind, also die Segmente möglichst aneinander anliegen.

Fig. 4b zeigt im Schnitt eine formschlüssige Verdrehsicherung zwischen Scheibenbelag 21 und Grundkörper 1a, wobei es sich um Segmente 6 a, b, oder einen ringförmig einstückigen Belag handeln kann. Ein radial verlaufender Steg 15' ist dabei axial vorstehend auf der Stirnfläche des Basiskörpers 1a ausgebildet, der formschlüssig zwischen den Seitenflächen 13 einer entsprechenden Vertiefung auf der Rückseite des Scheibenbelages 21 bzw. Segmentes 6a eingreift. Wie die axiale Befestigung der Scheibenbelage am Basiskörper 1a gelöst ist, ist dabei unerheblich.

Auf der rechten Seite ist die umgekehrte Lösung mit einer Ausbildung einer Erhebung 25 auf der Rückseite des Scheibenbelages dargestellt, die in eine entsprechende Vertiefung des Grundkörpers 21 a formschlüssig eingreift.

In der unteren Bildhälfte ist weiterhin ein Verbindungsstift 29 eingezeichnet, der sich in diesem Fall durch den gesamten Grundkörper 1a hindurch erstreckt und axial beidseitig aus diesem vorsteht in die Scheibenbeläge 21 hinein und auch in deren Verschleißbereich hinein, so dass beim zunehmenden Abrieb des Scheibenbelages auch diese Verbindungsstifte 29 mit abgeschliffen werden, die zu diesem Zweck aus relativ weichem und damit für den Verschleiß des Bremsklotzes unschädlichen Material, insbesondere Weichmetallen wie Messing und Aluminium, bestehen, und nur 1 mm-2 mm Durchmesser besitzen.

### BEZUGSZEICHENLISTE

- 1: Bremsscheibe
- 1a: Basiskörper
- 2: Bremsklotz
- 3: Rad
- 4: Nabe
- 5: Bremszange
- 6a, b, x: Segment
- 7: Zwischenwinkel
- 8: Befestigungsfläche
- 9: Kontaktflächen
- 10: Achsrichtung
- 11: Hauptebene
- 12: Belüftungsöffnung
- 13: Seitenflächen
- 14: Hinterschnitt
- 15: Steg
- 16: Niete
- 17: Raststift
- 18: Öffnung
- 19: Außenwulst
- 19': Innenwulst
- 20: Kleber
- 21: Scheibenbelag
- 22: Klotzbelag
- 23: Rückenplatte
- 24: Schraube
- 25: radiale Erhebung
- 26: Ausgleichsmasse
- 27: Sicherungsring
- 28: Öffnungen
- 29: Verbindungsstifte
- 30: Rastnase
- 31: Rastvertiefung
- 32: Stegen zwischen 12
- 33: Zwischenring
- 34: Öffnung
- 35: Innengewinde
- 36: axialer Vorsprung
- 37: axiale Vertiefung

## Patentansprüche

1. Radbremse, umfassend
- einen mit dem Rad (3) mitdrehenden Bremskörper, insbesondere eine Bremsscheibe (1), mit einem unlösbar darauf befestigten Scheibenbelag (21),
- wenigstens einen nicht mit dem Rad (3) mitdrehenden, gegen den Bremskörper pressbaren, Bremsklotz (2) mit einem an seiner Rückenplatte (23) gehaltenen Klotzbelag (22), wobei
- der Scheibenbelag (21) aus gegenüber dem Bremsklotzbelag (22) weicheren Materialien besteht,
**dadurch gekennzeichnet, dass**
der Scheibenbelag (21) auf dem Basiskörper (1 a) aufgekupfert ist.

2. Radbremse nach Anspruch 1,
**dadurch gekennzeichnet, dass**
der Scheibenbelag (21) unsegmentiert, also einstückig, auf der Seitenfläche des Basiskörpers (1a) aufgebracht ist.

3. Radbremse nach einem der vorhergehenden Ansprüche,
**dadurch gekennzeichnet, dass**
der Scheibenbelag (21) bzw. die Scheibenbeläge (21) auf dem Basiskörper (1a) gegen Relativverschiebungen in Umfangsrichtung durch formschlüssig zwischen beiden Elementen wirkende radial oder axial aufragende Erhebungen (25), insbesondere ausgebildet an dem Basiskörper (1 a), gehindert sind.

4. Radbremse nach einem der vorhergehenden Ansprüche,
**dadurch gekennzeichnet, dass**
bei sich axial erstreckenden Erhebungen (25) diese sich vorzugsweise vom Außenwulst (19) aus nach innen erstrecken.

5. Radbremse nach einem der vorhergehenden Ansprüche,
**dadurch gekennzeichnet, dass**
der Basiskörper (1a) aus einem Nicht-Stahlwerkstoff, insbesondere einem Leichtmetall wie Aluminium oder Magnesium, besteht.

6. Verfahren zur Herstellung einer Radbremse mit
- einem mit dem Rad (3) mitdrehenden Bremskörper, insbesondere einer Bremsscheibe (1), mit einem Scheibenbelag (21), und
- wenigstens einem nicht mit dem Rad (3) mitdrehenden, gegen den Bremskörper pressbaren, Bremsklotz (2) mit einem an seiner Rückenplatte (23) gehaltenen Klotzbelag (22),
**dadurch gekennzeichnet, dass**
der Scheibenbelag (21) auf dem ihn tragenden Bauteil vollflächig unlösbar aufgekupfert wird.

7. Verfahren nach Anspruch 6,
**dadurch gekennzeichnet, dass**
der Scheibenbelag (21) direkt jeweils auf einer Stirnfläche des Grundkörpers (1a) der Bremsscheibe (1) unlösbar aufgekupfert wird.

## Claims

1. A wheel brake, comprising:
- a brake body co-rotating with the wheel (3), in particular a brake disk (1) with a disk liner (21) permanently attached thereto,
- at least one brake pad (2), not co-rotating with the wheel (3), which can be pressed against the brake body and comprises a brake pad liner (22) attached to its back plate (23), wherein
- the disk liner (21) is comprised of a material, which is softer than the material of the brake pad liner (22),
wherein
the disk liner (21) is copper-bonded to the base body (1 a).

2. A wheel brake according to claim 1, wherein the disk liner 21 is not segmented, thus integrally attached to the side surface of the base body (1a).

3. A wheel brake according to one of the preceding claims, wherein the disk liner (21) or the disk liners (21) are secured on the base body (1a) against relative movement in circumferential direction through radially or axially protruding rises (25), causing form locking between said two elements, which rises are configured in particular at the base body (1a).

4. A wheel brake according to one of the preceding claims, wherein the axially extending rises (25) preferably extend from the outer bead (19) inward.

5. A wheel brake according to one of the preceding claims, wherein the base body (1 a) is made of a non-ferrous material, in particular made of a light metal, like aluminum or magnesium.

6. A method for producing a wheel brake, comprising:
- a brake body co-rotating with the wheel (3), in particular a brake disk (1) with a disk liner (21) permanently attached thereto, and
- at least one brake pad (2), not co-rotating with the wheel (3), which can be pressed against the brake body and comprises a brake pad liner (22) attached to its back plate (23),
wherein
the disk liner (21) is permanently copper-bonded to its support component with its entire surface.

7. A method according to claim 6, wherein the disk liner (21) is permanently copper-bonded directly onto a respective face of the base body (1a) of the brake disk (1).

## Revendications

1. Frein de roue, comprenant
- un corps de frein tournant avec la roue (3), en particulier un disque de frein (1) avec une garniture de frein (21) fixée de manière inamovible dessus,
- au moins un sabot de frein (2) ne tournant pas avec la roue (3) pressable contre le corps de frein, avec une garniture de sabot (22) maintenue contre la plaque arrière (23),
- la garniture de frein (21) se composant de matériaux plus mous par rapport à la garniture de sabot de frein (22),
**caractérisé en ce que**
la garniture de disque (21) est cuivrée sur le corps de base (1a).

2. Frein de roue selon la revendication 1, **caractérisé en ce que** la garniture de disque (21) est placée non segmentée, donc en une seule pièce sur la surface latérale du corps de base (1a).

3. Frein de roue selon l'une des revendications précédentes, **caractérisé en ce que**
la garniture de disque (21) respectivement les garnitures de disque (21) sont entravées sur le corps de base (1a) dans des déplacements relatifs dans le sens de la périphérie par des élévations (25) faisant saillie, qui sont formées en particulier sur le corps de base (1a), radialement ou axialement et agissant entre les deux éléments par adhérence des formes.

4. Frein de roue selon l'une des revendications précédentes, **caractérisé en ce que** les élévations (25) s'étendant axialement vont de préférence depuis le bourrelet externe (19) vers l'intérieur.

5. Frein de roue selon l'une des revendications précédentes**, caractérisé en ce que** le corps de base (1a) se compose d'un matériau non acier, en particulier d'un métal léger tel que l'aluminium ou le magnésium.

6. Procédé pour la revendication d'un frein de roue avec
- un corps de frein tournant avec la roue (3), en particulier un disque de frein (1) avec une garniture de frein (21) fixée de manière inamovible dessus,
- au moins un sabot de frein (2) ne tournant pas avec la roue (3) pressable cintre le corps de frein, avec une garniture de sabot (22) maintenue contre la plaque arrière (23),
**caractérisé en ce que** la garniture de disque (21) est cuivrée de manière inamovible sur toute la surface sur le composant le portant.

7. Procédé selon la revendication 6,
**Caractérisé en ce que** la garniture de disque (21) est cuivrée directement respectivement sur une surface frontale du corps de base (1a) du disque de frein (1).
